# EUROPEAN PATENT APPLICATION

(11) **EP 2 194 403 A1**
(43) Date of publication of application: **09.06.2010**
(21) Application number: 08275082.9
(22) Date of filing: 05.12.2008
(51) Int. Cl.: G01T 1/24

(54) **Radiation detector with resilient, opaque coating applied to the detector element**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A radiation detector is disclosed. The detector comprises a detector element; a number of electrodes arranged such that an electric field can be applied to the detector element; and a coating. The coating comprises a first, physically resilient layer, and a second, substantially opaque layer, and is disposed at an external surface of the detector element.

## Description

The present invention relates to a radiation detector. More particularly, the present invention relates to a resilient radiation detector.

The radiation that the present invention is intended to detect comprises particles that are of atomic or sub-atomic scale, and that have sufficient energy to cause ionisation in a semiconductor. Such radiation occurs in a number of types, including alpha, beta, gamma and other energetic photons, and neutron radiation. There exist a number of applications for detectors operable to characterise a radiation field, either in terms of the flux of particles, or in terms of the energy of the particles in the radiation fields, or in terms of a combination of energy and flux. Such applications include the monitoring of radiation from nuclear reactors used in power generation, and the monitoring of radiation sources used in radiation therapies.

Current radiation detectors are designed primarily for use in environments where conditions can be easily controlled, such as in a laboratory environment. However, in many applications, it is necessary to monitor the radiation field in more harsh environments. In the case of nuclear reactor monitoring, high temperatures may be encountered. Moreover, emergency services reacting to the detonation of a so-called 'dirty' bomb, that may release radiation, have a need for radiation detectors that are able to monitor potential radiation contamination, and that are resilient both to physical damage, that may easily occur where a rapid response is required, and to environment, so that the detector remains operable regardless of, for example, humidity. Similar detectors are required for nuclear decontamination work.

There are a number of different types of radiation detector, including scintillation detectors, Geiger-Müller tubes, and solid state detectors. Solid state radiation detectors generally comprise a detector element formed from a semiconductor material to which an electric field is applied. When a particle of ionising radiation passes through a semiconductor material, it interacts with the material to generate electron-hole pairs, which separate under the influence of the applied field, thereby generating a current that can be amplified and measured by suitable electronic measuring apparatus. The magnitude of the measured signal can be related to the energy of the particle incident on the detector. However, there exists a need for more resilient solid state detectors. For example, in many current solid state radiation detectors it is necessary to minimise the amount of light reaching the detector element, since ambient light impinging on the detector element can cause a leakage current. In some detectors, such as those in which silicon is used as the detector element, the leakage current can be greater than the signal generated from the radiation that the detector is designed to detect. Thus, such radiation detectors are covered by a metal foil. However, the foil cover must be made thin in order to ensure that, for example, alpha particles can pass through the covering. As a result, scratching, even by fingernails can easily cause surface damage that allows light into the detector element. Such surface damage leads rapidly to severe problems caused by leakage currents.

It is an aim of the present invention to provide a radiation detector that overcomes, or at least mitigates, some of the above-mentioned problems. It is a further aim of the present invention to provide a more resilient radiation detector, for use, for example, in contamination monitoring.

In broad terms, the present invention resides in the concept of providing a protective coating to a radiation detector. By providing a coating that is both physically resilient and generally opaque, a more robust radiation detector is obtained, both in terms of robustness to the environment in which it is operable, and in terms of robustness to physical damage.

In accordance with a first aspect of the present invention, there is provided a radiation detector comprising a detector element; a number of electrodes arranged such that an electric field can be applied to the detector element; and a physically resilient, generally opaque coating; the coating being disposed at an external surface of the detector element. Radiation detectors in accordance with the first aspect of the invention are better suited to working in harsh environments, and are more robust to physical damage than prior known radiation detectors. The coating may be electrically conducting. Where the coating is electrically conducting, the detector is better shielded from electromagnetic interference, and a better signal-to-noise ratio can therefore be achieved.

Preferably, the coating comprises a first, physically resilient layer, and a second, generally opaque layer. The generally opaque layer may be electrically conducting. Herein, it will be understood that the term 'electrically conducting' means having a metallic conductivity, of about 10³ Sm⁻¹ or greater, such as may be observed in metals or highly doped semiconductors. The physically resilient layer may be formed from an electrically insulating dielectric material. Preferably, the dielectric material is selected to have a low dielectric constant, in order that there is a low capacitance across it. Materials such as silicon (having a dielectric constant of about 11.9) will herein be understood to have a low dielectric constant. The physically resilient layer may be disposed between the detector element and the generally opaque layer.

The thickness of the coating may be less than 10 µm. More preferably, the thickness of the coating is less than 4 µm. In some preferred embodiments, the thickness of the physically resilient layer may be in the range between 0.5 µm and 2 µm. The interaction of the physically resilient layer with incident radiation is then advantageously sufficiently small not to significantly affect the detection of radiation by the detector, but remains sufficient to adequately protect the detector from surface damage. The thickness of the generally opaque layer is in the range between 0.5 µm and 2 µm. Within this range, the coating is sufficiently thick to be generally opaque, whilst not significantly interacting with incident radiation.

The first layer may comprise a material having a hardness greater than that of steel. Steel is likely to be the hardest material with which the detector may come into contact with in general use, and it is preferable for the detector to be resistant to scratch damage by steel, or by softer materials.

The second layer may comprise a material selected such that a layer of the material deposited on the first layer adheres to the first layer. Alternatively, an adhesion-promoting layer, formed of a material that will adhere well to the first layer and to which the second layer will also adhere, may be used.

The first and second layers may consist of materials that are not activated by incident radiation. As those skilled in the art will appreciate, activation of a material results in that material itself emitting radiation. Such secondary radiation will deleteriously affect the accuracy of the detector. Thus, for example, the first layer may comprise silicon carbide or diamond-like carbon (both of which are harder than steel). The second layer may comprise aluminium or titanium.

In accordance with a second aspect of the present invention, there is provided a method of protectively coating a radiation detector, comprising depositing a first, physically resilient layer onto an external surface of the detector, and depositing a second, substantially opaque layer onto the first layer.

An exemplary embodiment of the invention will now be described, with reference to the accompanying drawing, in which:

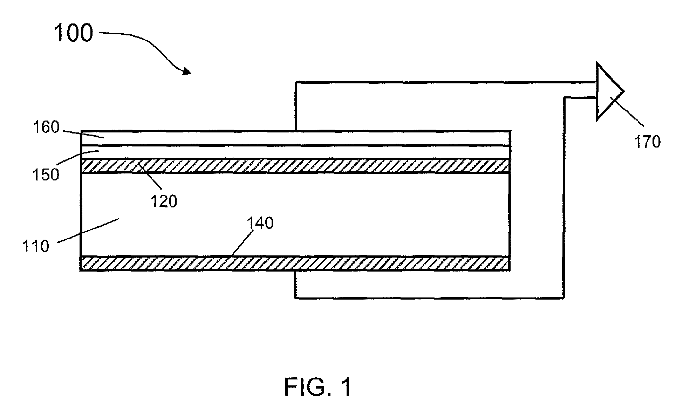

Figure 1 is a schematic cross-sectional view through a radiation detector in embodiment of the invention.

A radiation detector 100 in accordance with a first embodiment of the present invention is shown schematically in Figure 1. Detector 100 comprises a semiconductor detector element 110, on which a first, upper electrode 120, and a second, lower electrode 140 are formed. In use of the detector 100, the upper surface (as shown in Figure 1) is exposed to the radiation field. A coating is formed on the upper surface of the detector element 110 so as to protect the detector 100 from physical damage, and from other effects of the ambient environment, such as noise resulting from light incident on the detector element 110. The protective coating comprises a first, physically resilient layer 150 provided on the upper surface of the detector element 110, above the electrode 120, and a second, substantially opaque layer 160 provided on the upper surface of the physically resilient layer 120. Layers 150 and 160 are described in further detail below.

In the present embodiment, detector element 110 is formed form lightly-doped silicon. Lightly doped silicon is doped with an amount of dopant that is just higher than the compensation level in the silicon, so that it can be ensured that the material is definitely either n-type or p-type semiconductor. Upper electrode 120 is a rectifying p-n junction structure, formed as a layer of nickel silicide on the surface of the detector element. Lower contact 130 is an ohmic contact fabricated from aluminium. In use of the detector 100, and electric field is applied across the detector element by applying a positive voltage to the upper electrode, and connecting the lower electrode to earth, as is indicated schematically in Figure 1. Current generated by the passage of a radiation particle through the detector element 110 is then amplified by amplifier 170 and conditioned by external electronics.

Layer 150 is a physically resilient dielectric layer to protect the detector element from physical damage, such as from scratching, and to prevent damage to the electrode 120 formed on the upper surface of the detector element 110. Layer 150 is therefore formed from a material that is harder than materials with which the detector 100 may come into contact. Typically, the detector is unlikely to come into contact with materials harder than, for example, steel. Most forms of steel have a hardness, on the Mohs scale, of between 6 and 6.5; at the extreme, ultra-hardened steel has a hardness of approximately 7.5. As the skilled reader will appreciate, the Mohs scale is a relative scale, comparing hardness to a set of standard minerals by determining which minerals are scratched by a material under test. Thus, a first material having a higher (Mohs) hardness than another, second material will be resistant to scratch damage by the second material. Thus, it is preferable for layer 150 to be formed from a material having a hardness, on the Mohs scale, greater than about 6. The hardness of a thin film, such as layer 150, of any particular material will not be the same as the hardness of a bulk sample of that particular material: the hardness of the thin film will depend on its adhesion to the substrate on which it is formed, and on the choice of material used to form the substrate. However, in general, it is anticipated that the hardness of the thin film will be greater than that of the bulk material. It will be appreciated that, in the case of layer 150, it is the hardness of the layer itself that is of importance, rather than the hardness of a bulk sample of the material from which layer 150 is formed.

In the present embodiment, layer 150 is formed from diamond-like carbon, a material that can be readily deposited over large area wafers such as may be used in contamination probes, and that exhibits similar mechanical properties to diamond. In particular, the hardness of diamond-like carbon is similar to that of diamond. Diamond-like carbon can be fabricated in several different forms; in the present embodiment, it is preferable to use hydrogen-free tetrahedral amorphous carbon, which consists only of sp³ bonded carbon atoms, and the mechanical properties of which most closely resemble those of natural diamond. Natural diamond defines the upper limit (10) of the Mohs scale of hardness. As a result of the low atomic number of carbon, diamond-like carbon interacts only weakly with incident radiation. Thus the accuracy of measurements of a radiation field by the detector 100 is less likely to be affected by absorption of radiation in layer 150, or by the generation of secondary radiation. Furthermore, the dielectric constant of diamond is low (between 5.5 and 5.7 at a typical room temperature of 300 K), such that the capacitance of the layer 150 remains small. It is preferable for the capacitance of the layer 150 to remain low in order for the input electronics to function correctly.

The thickness of the layer 150 is selected such that the radiation detector element benefits from enhanced resilience, but such that radiation particles incident on the detector lose only a small proportion of their energy in traversing the layer. Whilst such losses can be reduced in part through appropriate selection of the material from which layer 150 is formed, it is preferable to further reduce such losses since characterisation of the radiation incident on the detector is at least in part dependent on accurate measurement of the energy of particles incident on the detector. Such characterisation can be important, since it may be desired to identify which specific radio-nuclei are responsible for an observed radiation field. Radio-nuclei emit particles having distinct and predictable energies. In the present embodiment, layer 150 is selected to be approximately 0.5 µm thick.

Layer 160 is a highly conducting, substantially opaque layer that, as in the case of layer 150 described above, is fabricated from a material that does not interact strongly with radiation fields. Layer 160 enhances the signal-to-noise ratio of the detector by reducing the amount of light falling on the detector, and by providing electromagnetic shielding to the detector element. By substantially opaque, it will be understood that the layer reduces to an insignificant level any signal generated by light incident on the detector element. In the present embodiment, layer 160 is fabricated from titanium. Titanium is particularly preferred because it adheres well to the diamond-like carbon layer 150, is metallic and therefore highly conducting, and interacts only weakly with incident radiation. In particular, it is not activated by high neutron flux. The thickness of layer 160 is selected to be sufficiently great to ensure that layer 160 is substantially opaque, but, as in the case of layer 150, it is necessary to ensure that layer 160 is not so thick as result in significant energy losses to radiation particles passing through the layer. In the present embodiment, layer 160 is selected to be approximately 1 µm thick.

It is to be noted that the above-described embodiment is in all respects exemplary. Variations and modifications of the above-described embodiment are possible without departing from the scope of the invention, which is defined in the accompanying claims. For example, it will be immediately appreciated that the protective coating of the above-described embodiment can be readily applied to other forms of solid state radiation detector. The detector element may be fabricated using different materials, such as gallium nitride grown on a sapphire substrate. Different electrode configurations may be used: many forms of rectifying contact can be used for the upper electrode, including Schottky barrier contacts, or heterojunction structures. Other materials may also be used for the protective coating: for example, the substantially opaque layer could be formed using titanium nitride, which is a very hard material (having a hardness of about 9 on the Mohs scale) that is also a good electrical conductor, or aluminium; whilst the resilient layer could be formed using any material having a suitable hardness, such as polycrystalline silicon carbide (which has a hardness of 9.5 on the Mohs scale), topaz (which has a hardness of 8 on the Mohs scale), quartz (which has a hardness of 7 on the Mohs scale), or sapphire (which has a hardness of about 8 on the Mohs scale).

Moreover, those skilled in the art will also appreciate that it will be possible to vary the thickness of the layers forming the protective coating of the radiation detector described above. It is presently thought that the protective coating could have a total thickness of up to 4 µm, with each layer having a thickness of up to 2 µm, without causing significant detriment to the ability of the detector to accurately measure the energy of incident radiation particles. However, in some applications it will be preferable to minimise such losses, and therefore may be preferable to use as thin a protective coating as possible whilst still being consistent with the aim of enhancing the signal to noise ratio of the detector, and enhancing the robustness of the detector. In other applications, it may be preferable to use thicker layers in order to enhance (for example) the resilience of the detector. Thus, each layer may have a thickness in the range between 0.5 µm and 2 µm.

It will also be appreciated by those skilled in the art that it may be possible to use a protective coating having more than two layers. For example, in some applications it may be desirable to apply an adhesion-promoting flash layer to the physically resilient layer prior to applying the generally opaque layer. Titanium, for example, can be used as an adhesion-promoting layer, onto which aluminium may be readily deposited. Use of an adhesion promoting layer widens the range of materials that can be used to form the generally opaque layer. Other functionality may also be incorporated into the detector: for example, it may be desired to include a temperature sensor in the detector, particularly where it is desired to operate the sensor in environments where the temperature may vary by an amount that may affect the operation of the detector element.

## Claims

1. A radiation detector comprising a detector element; a number of electrodes arranged such that an electric field can be applied to the detector element; and a physically resilient, generally opaque coating; the coating being disposed at an external surface of the detector element.

2. A radiation detector as claimed in claim 1, wherein the coating is electrically conducting.

3. A radiation detector as claimed in claim 1 or claim 2, wherein the coating comprises a first, physically resilient layer, and a second, generally opaque layer.

4. A radiation detector as claimed in any preceding claim, wherein the generally opaque layer is electrically conducting.

5. A radiation detector as claimed in claim 3 or claim 4, wherein the physically resilient layer is disposed between the detector element and the generally opaque layer.

6. A radiation detector as claimed in any preceding claim, wherein the thickness of the coating is less than 10 µm.

7. A radiation detector as claimed in any preceding claim, wherein the thickness of the coating is less than 4 µm.

8. A radiation detector as claimed in any one of claims 3 to 7, wherein the thickness of the physically resilient layer is in the range between 0.5 µm and 2 µm.

9. A radiation detector as claimed in any one of claims 3 to 8, wherein the thickness of the generally opaque layer is in the range between 0.5 µm and 2 µm.

10. A radiation detector as claimed in any preceding claim, wherein the first layer comprises a material having a hardness greater than that of steel.

11. A radiation detector as claimed in any preceding claim, wherein the first layer comprises silicon carbide or diamond-like carbon.

12. A radiation detector as claimed in any preceding claim wherein the second layer comprises a material selected such that a layer of the material deposited on the first layer adheres to the first layer.

13. A radiation detector as claimed in any preceding claim, wherein the first and second layers consist of materials that are not activated by incident radiation.

14. A radiation detector as claimed in any preceding claim, wherein the second layer comprises aluminium or titanium.

15. A method of protectively coating a radiation detector, comprising depositing a first, physically resilient layer onto an external surface of the detector, and depositing a second, substantially opaque layer onto the first layer.
